(19) Europäisches Patentamt
European Patent Office
Office européen des brevets

(11) EP 1 679 561 A2

(12) EUROPEAN PATENT APPLICATION

(43) Date of publication:
**12.07.2006 Bulletin 2006/28**

(51) Int Cl.:
***G03H 1/04*** *(2006.01)* ***G02B 27/22*** *(2006.01)*

(21) Application number: **06000318.3**

(22) Date of filing: **09.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.01.2005 JP 2005004456**

(71) Applicant: **FUJI PHOTO FILM CO., LTD.**
**Minami-Ashigara-shi, Kanagawa (JP)**

(72) Inventor: **Usami, Yoshihisa**
**Fujinomiya-shi,**
**Shizuoka-ken (JP)**

(74) Representative: **Thun, Clemens et al**
**Mitscherlich & Partner**
**Sonnenstrasse 33**
**80331 München (DE)**

(54) **Hologram recording method, hologram recording apparatus, and hologram recording medium**

(57) The present invention provides a hologram recording method which enables obtaining floating and high-quality images which can be stereoscopically viewed from wide viewing angles of 360° in a low-cost and simple production method and to provide a hologram recording apparatus and a hologram recording medium.

Thus, the present invention relates to a hologram recording method which includes irradiating a coherent object beam virtually simultaneously to almost all the surface of a recording object to make the reflected object beam from the surface incident on a photosensitive surface of a photosensitive material, making a coherent reference beam incident on the opposite surface of the photosensitive material with respect to the photosensitive surface to generate interference fringes by the object beam and the reference beam, and recording the interference fringes on the photosensitive material, and a hologram recording medium and a hologram recording apparatus using the method.

FIG. 2

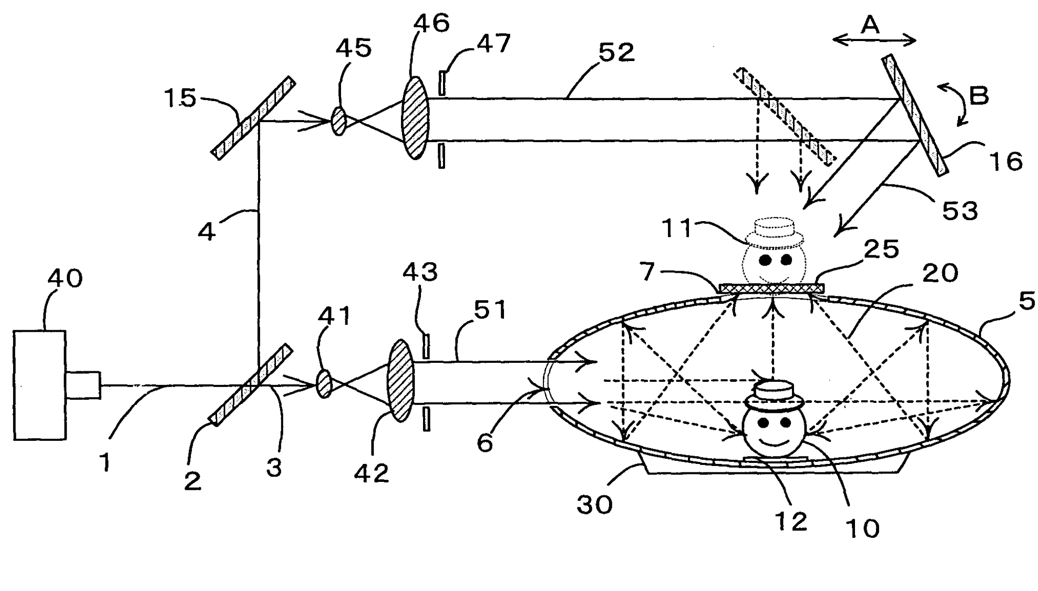




Printed by Jouve, 75001 PARIS (FR)

## Description

BACKGROUND OF THE INVENTION

Field of the Invention

The present invention relates to an image recording method, particularly relates to a hologram recording method which enables obtaining floating and high-quality images which can be stereoscopically viewed from wide viewing angles of 360° in a low-cost and simple production method. The present invention also relates to a hologram recording apparatus and a hologram recording medium using the hologram recording method.

Description of the Related Art

A hologram recorded by means of holography is a one in which interference fringes caused by coherence between object beams reflected from an object and a reference beam which is irradiated separately from the object beam are recorded, and when a beam same as the reference beam is irradiated to the hologram, a stereoscopic image same as the original object can be viewed.
To generate the interference fringes, a beam which is coherent, has visuospatial waves and is capable of being temporally retained for a substantially long time, for example, a laser beam is generally used. For this reason, to reproduce an original object as a stereoscopic image, it is required that a laser beam same as the reference beam be irradiated to the hologram to induce diffracted beams corresponding to the interference fringes and then to reproduce a stereoscopic image of the original object. When white light such as sunlight is irradiated to a hologram, the reproduced stereoscopic image blurs and cannot be clearly reproduced, because lights at various wavelengths are mixed.
Then, there has been known hologram technologies enabling clear reproduction of original images by utilizing the monochromatization of such a white light (Bragg reflection), and examples thereof include image hologram, Ripman hologram, Denishuk hologram, and rainbow hologram.
These holograms are used for labels and sheets such as for log marks, character goods, and packages, as well as for preventing unauthorized copies and counterfeit for the purpose of security because these holograms enable reproducing original stereoscopic images using white light.
As a method for recording such a white light reproduction hologram, conventionally, a method has been used in which a light from a light source is split and used. For example, such a method include Ripman hologram, in which a laser light such as He-Ne is used as the light source, the laser beam is split into a transmitted light and a reflected light by means of a half mirror, the transmitted light is irradiated to an object as an object beam, and the reflected object beam from the object is irradiated to a photosensitive surface on a hologram recording dry plate. On the other hand, the reflected beam is irradiated as a reference beam to the substrate surface which is disposed on the opposite surface of the hologram recording dry plate with respect to the photosensitive surface. Then, interference fringes are generated by coherence between the object beam and the reference beam on the hologram recording dry plate, and the interference fringes are recorded on the hologram recording dry plate to thereby compose a hologram. Typically, the hologram is used for a master hologram, and labels and sheet-like holograms with real images reproduced from the master hologram respectively recorded thereon are used. By recording the master hologram on a sheet of hologram using various image patterns such as designs, numbers and marks, it is possible to form a hologram enabling viewing only the designs when viewed from a certain angle and viewing only the numbers when viewed from a different angle.
A hologram recording method utilizing the Ripman hologram method is known in which an object beam is directly irradiated to an object, the reflected object beams are concentrated on a photosensitive surface of the hologram recording dry plate, a reference beam is irradiated from the substrate surface which is the opposite surface of the hologram recording dry plane with reference to the photosensitive surface, interference fringes induced on the photosensitive surface are recorded to produce a hologram and then to enable reproducing a stereoscopic image by lightning white light (for example, see Japanese Patent Application Laid-Open (JP-A) No. 05-19672).
However, in the case of the recording method, the object beam is irradiated to the static object from one direction, therefore, the range where the image is viewable as a stereoscopic image to be recorded is limited, and it is impossible to obtain a circumferentially-viewed stereoscopic image, and it leaves much to be desired as a stereoscopic image.
As a hologram which is capable of obtaining a circumferentially-viewed microscopic image of an object, a hologram recording method by means of a holographic stereogram is known. The holographic stereogram recording method is a method in which images of an object are sequentially taken in the horizontal direction of the object and from entire circumference of the object by using a camera or the like, a number of these obtained images are recorded in a sheet of hologram recording medium by using these images as the original image by means of the Ripman hologram recording method (for example, see Japanese Patent Application Laid Open (JP-A) No. 10-26924).

However, when using the hologram recording method, there is a problem that it is impossible to reproduce a stereoscopic image of the object viewed from the elevated directions of the object, which are not taken by the camera, although it is possible to reproduce a stereoscopic image of the object from the direction where the object is taken by a camera, namely in the horizontal direction of the object.

For a hologram recording method which resolves the problems and is capable of stereoscopically viewing an object from elevated directions of the object or the like, there has been known a hologram recording method which enables forming a three-dimensional image of the object by means of an image processing technology utilizing parallax through the use of a computer. The hologram recording method is a method in which parallax information of an object in the horizontal and perpendicular directions of the object is recorded as hologram elements to form an aggregate of the hologram elements and then to record the aggregate of the hologram elements as a stereoscopic image. The recording method enables reproducing a stereoscopic image viewed from the left, right, top and bottom of an object (see Japanese Patent Application Laid-Open (JP-A) No. 10-26924).

However, in the case of the hologram recording method, an image is formed with the aggregate of the image units (hologram elements), therefore, when high-quality imaging is demanded, enormous numbers of hologram elements are required, it needs to create and process a large quantity of the hologram element data, and the image formation process is complicated. Accordingly, with the hologram recording method, it is hard to obtain low-cost holograms, and it is not quite satisfactory as an easy and simple hologram recording method.

SUMMARY OF THE INVENTION

It is therefore an object of the present invention to provide a hologram recording method which enables obtaining floating and high-quality images which can be stereoscopically viewed from wide viewing angles of 360° in low-cost and simple production method, as well as to provide a hologram recording apparatus and a hologram recording medium using the hologram recording method.

Thus, in the hologram recording method of the present invention, a coherent object beam and a coherent reference beam, which may be hereinafter referred to as an object beam and a reference beam simply, are used, the object beam is virtually simultaneously irradiated to almost all the surface of a recording object to make the reflected object beam from the surface of the recording object incident on a photosensitive surface of a photosensitive material, the reference beam is made incident on the opposite surface of the photosensitive material with respect to the photosensitive surface to generate interference fringes by the object beam and the reference beam and then to record the interference fringes on the photosensitive material.

In the hologram recording method, when the coherent object beam is directed and irradiated to the recording object, both of the object beam directly irradiated to the recording object and the object beam which is once reflected and slightly belatedly irradiated to the recording object are irradiated virtually simultaneously to almost all the surface of the recording object except for part of the bottom surface of the recording object, and the reflected object beam from the surface of the recording object is made incident on the photosensitive surface of the photosensitive material. On the other hand, the coherent reference beam is irradiated to the opposite surface of the photosensitive material with respect to the photosensitive surface. When the reference beam is irradiated from a different direction from which the object beam is irradiated, and the object beam and the reference beam are overlapped on and around the photosensitive surface of the photosensitive material, interferences of beams, namely, interference intensifying each other and interference weakening each other, are induced to generate interference fringes comprising beam concentration on the parallel surfaces which are parallel to the vertical surfaces being perpendicular to the beam traveling direction. Further, the parallel surface on which the interference fringes are induced is multiply-generated in the beam traveling direction, and the interval of individual parallel surfaces is determined depending on the wavelength of the beam from the light source, the distance between the recording object and the photosensitive material, and the reflected position of the recording object. The generated interference fringes include an intensity of the reflected object beam from the recording object (brightness of the object beam), and a phase of the reflected object beam (information from which the object beam is reflected). The generated interference fringes are recorded on the photosensitive surface of the photosensitive material as they are. In other words, the concentration of the interference fringes is recorded on the photosensitive surface of the photosensitive material, the concentration of the interference fringes is recorded in the same manner on a first parallel surface formed at the same interval as the interval in the thickness direction of the photosensitive material, and the concentration of interference fringes is recorded in the same manner on a second parallel surface further formed at the same interval in the thickness direction of the photosensitive material. Then, the concentration of the interference fringes is multiply recorded in the thickness direction of the photosensitive material as much as possible in sequence.

To reproduce the thus recorded interference fringes, a white light beam is irradiated as a reproduced beam to the opposite surface of the photosensitive material with respect to the photosensitive surface, namely, from the same direction to which the reference beam is made incident. By the irradiation effect, diffracted beams corresponding to the recorded interface fringes are generated. The diffracted beams have the same light beam intensity and phase as those

of the object beams generated on the photosensitive surface at the time of recording. Since the interference fringes recorded on the photosensitive material are multiply-recorded in the thickness direction of the photosensitive material, the reproduced beam hits against the interference fringes recorded on the photosensitive surface of the photosensitive material to generate a diffracted beam diffracted from the photosensitive surface, and further, a first diffracted beam diffracted from the first parallel surface formed at the interval, and a second diffracted beam diffracted from the second parallel surface at the interval are multiply generated in sequence. Since these diffracted beams are formed at a distance in the thickness direction of the photosensitive material, an optical path difference, namely, a difference in distance of optical path, arises between the diffracted beam on the photosensitive surface and the first diffracted beam, however, when the optical path difference is represented as an integral multiple of the wavelength of the optical beam, these diffracted beams are reinforced to be one diffracted beam, which is referred to as monochromatization (reflection of Bragg law). For the reason, even when a white light in which lights each having a different wavelength are mixed is used as a reproduced beam, the monochromatization of diffracted light beams arises, therefore, it is possible to produce a diffracted beam just as in the case where a laser beam irradiated to the original image is used as a reference beam and to clearly reproduce the original stereoscopic image, as well as to visually and clearly view a stereoscopic image of the recording object in a state where the stereoscopic image floats on the stand plate.

BRIEF DESCRIPTION OF THE DRAWINGS

FIG. 1 is a view schematically showing the hologram recording of the present invention.
FIG. 2 is a view schematically showing the hologram recording apparatus of the present invention.
FIG. 3 is a cross-sectional view of a curved mirror of the hologram recording apparatus of the present invention.
FIG. 4 is a cross-sectional view of a curved mirror of the hologram recording apparatus of the present invention.
FIG. 5 is a cross-sectional view of a curved mirror of the hologram recording apparatus of the present invention.

DESCRIPTION OF THE PREFERRED EMBODIMENTS

- Hologram Recording Method -

The hologram recording method of the present invention comprises irradiating a coherent object beam virtually simultaneously to almost all the surface of a recording object to make the reflected object beam from the surface of the recording object incident on a photosensitive surface of a photosensitive material, making a coherent reference beam incident on the opposite surface of the photosensitive material with respect to the photosensitive surface to generate interference fringes by the object beam and the reference beam, and recording the interference fringes on the photosensitive material through other steps suitably selected in accordance with the necessity.

- Hologram Recording Apparatus -

The hologram recording apparatus of the present invention comprises an object beam irradiating unit, a reference beam irradiating unit, an interference fringe generating unit, an interference recording unit, and other units suitably selected in accordance with the intended use.

The hologram recording method of the present invention can be carried out by means of the hologram recording apparatus of the present invention. Hereinafter, the hologram recording method will be described in detail through the explanations on the hologram recording apparatus of the present invention.

In the hologram recording method, irradiation of the object beam to the recording object and irradiation of the reflected object beam from the surface of the recording object to the photosensitive surface of the photosensitive material can be preferably performed by the object beam irradiating unit of the hologram recording apparatus of the present invention. Irradiation of the reference beam in the hologram recording method to the opposite surface of the photosensitive material with respect to the photosensitive surface can be preferably performed by the reference beam irradiating unit of the hologram recording apparatus of the present invention. Formation of the interference fringes by the object beam and the reference beam in the hologram recording method of the present invention can be preferably performed by the interference fringe generating unit of the hologram recording apparatus of the present invention. Recording of the interference fringes in the hologram recording method of the present invention can be preferably performed by the interference fringe recording unit of the hologram recording apparatus of the present invention, and the other method in the hologram recording method can be preferably performed by the other unit in the hologram recording apparatus of the present invention.

- Object Beam Irradiating Unit -

The object beam irradiating unit is a unit in which a coherent object beam is directly irradiated to a recording object using a curved mirror, and a re-reflected beam which is further reflected on the curved mirror is irradiated to the recording object to thereby irradiate the object beam virtually simultaneously to almost all the surface of the recording object and then to make the reflected object beam from the surface of the recording object virtually simultaneously irradiated to the photosensitive surface of the photosensitive material directly and through the curved mirror, and the object beams are concentrated on and around the photosensitive surface to thereby form an image.

The object beam may be used singularly or in combination with two or more. By using a plurality of object beams, it is possible to irradiate much more object beams virtually simultaneously to almost all the surface of the recording object and to form a more preferable image.

With respect to the coherent object beam, it is possible to split a beam from the light source into, for example, two beams such as a transmitted beam and a reflected beam by means of a beam splitting unit to generate the transmitted beam as an object beam. It is also possible to sufficiently irradiate a large amount of the object beam to almost all the surface of the recording object by using a plurality of light sources, splitting the beams from each of the light sources by various beam splitting units to form a plurality of object beams, and irradiating the plurality of object beams from different directions. As just described, by irradiating a plurality of object beams from different directions, it is possible to form a preferable and uniform image.

By irradiating the object beams virtually simultaneously to almost all the surface of the recording object using three wavelengths which comprise one wavelength selected from wavelengths of 400 nm or more and less than 500 nm, one wavelength selected from wavelengths of 500 nm or more and less than 600 nm, and one wavelength selected from wavelengths of 600 nm to 700 nm, it is possible to obtain a color hologram.

Namely, by simultaneously using three primary color beams of three wavelengths which comprise a blue color beam at a wavelength selected from wavelengths of 500 nm or more and less than 600 nm, for example, at a wavelength of 405 nm, a green color beam at a wavelength selected from wavelengths of 600 nm to 700 nm, for example, at a wavelength of 535 nm, and a red color beam at a wavelength selected from wavelengths of 600 nm to 700 nm, for example, at a wavelength of 650 nm as object beams, it is possible to form a full-color image and to obtain a full-color hologram.

To simplify the description of the hologram recording method, the present invention will be hereinafter described with reference to an example of a monochrome laser beam, however, for other color laser beams, the same hologram recording method as in the monochrome laser beam can also be used, and a color hologram can be obtained by simultaneously using three types of wavelengths, as described above.

The beam splitting unit has a function to split a laser beam from the light source into two optical paths, namely, an object beam system and a reference beam system. The beam splitting unit is not particularly limited, provided that it can split one laser beam to different route directions and the optical properties thereof are excellent, and may be suitably selected in accordance with the intended use. Examples of the beam splitting unit include chromium half mirrors, laser-line multi-layer inducing half mirrors, large area multi-layer inducing half mirrors, hybrid half mirrors, multi-layer inducing half mirrors, non-polarized half mirrors, and beam splitters, multi-layer inducing beam splitters. Of these beam splitting units, non-polarized half mirrors are preferable, which can split a laser beam into a reflected beam and a transmitted beam at a ratio of 1:1 regardless of the polarizing conditions of the incident beam and is effective relative to only a single wavelength.

The structure of the non-polarized half mirror is not particularly limited, may be suitably selected in accordance with the intended use, and examples thereof include plate type non-polarized half mirrors and cubic-type non-polarized half mirrors.

The light source is not particularly limited and may be suitably selected in accordance with the intended use. Examples of the light source include solid laser oscillators, semiconductor laser oscillators, liquid laser oscillators, and gas laser oscillators. Among these oscillators, gas laser oscillators, semiconductor laser oscillators, or the like are preferably used.

The laser beam is not particularly limited and may be suitably selected in accordance with the intended use. For example, a laser beam comprising one or more selected from wavelengths of 360 nm to 850 nm is used. The wavelength is preferably 380 nm to 800 nm, more preferably 400 nm to 750 nm, and most preferably 500 nm to 600 nm where the center of the visible region is most easily viewable.

When the wavelength is less than 360 nm, a sharp stereoscopic image may not be obtained. When the wavelength is more than 850 nm, the interference fringes are microscopic, and a photosensitive material capable responding to such a microscopic structure may not be obtained.

FIG. 2 shows an example of split optical paths in which laser oscillator 40 is used as the light source, and laser beam 1 is split into transmitted beam 3 and reflected beam 4 using a plate type non-polarized half mirror as a beam splitting unit.

To use the transmitted beam as an object beam, as shown in FIG. 2, the transmitted beam 3 is made incident to beam expanders 41 and 42 to transform the transmitted beam into object beam 51 having a given width using aperture 43 such that the object beam is preferably irradiated to the recording object 10.

The beam expander 41 is not particularly limited and may be suitably selected in accordance with the intended use. Examples of the beam expander 41 include module type laser beam expanders in which the beam expanders 41 and 42 are integrally combined, and Galileo type beam expanders using two sheets of ZnSe lenses. Of these beam expanders, Galileo type beam expanders are preferably used, which enable easy adjustment of optical axes and adjustment of a divergent angle according to the intended use by adjusting the distance between the lenses.

The aperture 43 is not particularly limited, provided that it is an aperture capable of defining the transmittable range of an incident laser beam, and may be suitably selected in accordance with the intended use. Examples of the aperture include apertures formed in a circular form, in a rectangle, in an ellipsoidal form, and in a polygonal form.

The object beam 51 is directed and irradiated from aperture 6 formed on curved mirror 5 to recording object 10 placed on stand plate 12 which is located at the bottom of the curved mirror 5. The irradiated object beam 51 reflects on the recording object 10 to be incident on the photosensitive surface of photosensitive material 25 mounted above the recording object 10 on the curved mirror 5. Further, the object beam 51 reflects on the inner surface of the curved mirror 5 to irradiate to the recording object 10, and the reflected beam further reflect on the curved mirror 5 to be re-reflected beam 20, and the re-reflected beam 20 is made incident on the photosensitive surface of the photosensitive material 25. The hologram recording apparatus is designed so that such reflections and re-reflections are performed virtually simultaneously on almost all the surface of the recording object except for a part of the bottom surface on which the recording object is placed, and all the reflected beams and re-reflected beams are concentrated on and around the photosensitive surface of the photosensitive material 25 to thereby form an image.

The curved mirror 5 has a function to reflect on the object beam 51 to irradiate to the recording object 10 and then to further re-reflect the reflected object beam to the recording object 10 to make the reflected object beam incident on the photosensitive material 25.

The curved mirror is not particularly limited and may be suitably selected in accordance with the intended use, provided that it comprises a mirror surface on the internal surface thereof, and the mirror surface is shaped so that all the reflected beams and re-reflected beams from the recording object 10 can be concentrated on and around the photosensitive surface of the photosensitive material 25 to form an image. Examples of the curved mirror include concave spherical reflectors, concave non-spherical reflectors, concave parabolic curve reflectors, and concave ellipsoidal reflectors. Of these curved reflectors, concave parabolic curve reflectors are preferable, which enable effectively concentrate all the parallel beams on one focal point. Part of the curved reflector may be formed in a shape differently from concave spherical reflectors, concave non-spherical reflectors, concave parabolic curve reflectors, and concave ellipsoidal reflectors, and the curved reflector may comprise notches, concaves and convexes at a part thereof as long as the beam concentration function is not impaired.

With respect to the shape of the mirror surface of the curved reflector, a mirror surface having a plane symmetry with reference to the surface which includes an axis passing through the center of the curved surface of the curved mirror and being perpendicular to the curved surface of the center part is preferable, because the object beams and the reflected beams act upon a plane symmetry, these beams are uniformly concentrated on and around the photosensitive surface, and an image is uniformly formed.

The structure of the curved mirror 5 is not particularly limited and may be suitably selected in accordance with the intended use. For example, the curved mirror may be structured singularly or in combination with two or more. As shown in FIG. 3, the curved mirror may have a bilateral symmetry structure at top and bottom thereof into 5a and 5b, or may have a tetrahedral symmetry structure at the left, right, top and bottom thereof, as shown in FIG. 4, into 5a, 5b, 5c, and 5d, and the curved mirror may have a split structure in which the curved mirror is further split.

The material used for the curved mirror is not particularly limited, provided that it has such a mechanical strength that the material itself is not easily deformed, and may be suitably selected in accordance with the intended use. For example, the material of the curved mirror may be metal or plastic.

The metal is not particularly limited, may be suitably selected in accordance with the intended use, and examples thereof include stainlesses, aluminums, irons, coppers, and brasses. Among these metals, stainlesses, irons, and aluminums: are preferable, which have a high mechanical strength and excellent processability.

The plastic is not particularly limited and may be suitably selected in accordance with the intended use. Examples of the plastic include acrylonitrile-butadiene-styrenes (ABS), acrylonitrile-ethylene-styrenes (AES), each of which is a thermoplastic resin; and fiber-reinforced plastics (FRP) such as acrylonitrile-styrenes (AS), polycarbonates, polyethylenes, polystyrenes, polypropylenes, polyvinyl chlorides, nylons, and epoxies. Each of these plastics may be used alone or in combination with two or more. Of these plastics, acrylonitrile-butadiene-styrenes (ABS), and polycarbonates are preferably used from the perspective of formability and mechanical strength.

The size of the curved mirror is not particularly limited and may be suitably selected in accordance with the intended use, provided that a recording object can be placed thereon, and the reflected beams and the re-reflected

beams can be concentrated on and around the photosensitive surface of the photosensitive material 25 to form an image. For example, the outer shape of the curved mirror is preferably 10 mm to 1,000 mm in size. When the outer shape is less than 10mm in size, there are inconveniences in handling, of the recording object, and when the outer shape is more than 1,000 mm in size, it needs a large amount of laser beam irradiation, which inevitably requires a large size laser oscillator, and such a large size laser oscillator is not suited a simple hologram recording method as a whole.

The shape and the size of the aperture of the curved mirror are not particularly limited and may be suitably selected in accordance with the intended use. For example, the shape of the aperture 6 through which the object beam 51 is made incident is not particularly limited, provided that the aperture 6 is several mill meters greater than the width of the objective beam 51, and may be suitably selected in accordance with the intended use. For example, the aperture size is preferably 4mm to 10mm.

The aperture 6 may be formed at a single site or at two or more sites. By forming apertures 6 at plural sites such that the object beam 51 is irradiated from each of the apertures 6, a larger amount of object beam 51 can be irradiated to the recording object. The apertures 6 formed at plural sites may be formed in the same size or may individually have a different size in accordance with the width of the object beam.

The aperture 7 on which the photosensitive material 25 is fitted is not particularly limited, provided that the aperture 7 is smaller than the photosensitive material 25, and may be suitably selected in accordance with the intended use. For example, the aperture is preferably formed in 100 mm to 200 mm in size.

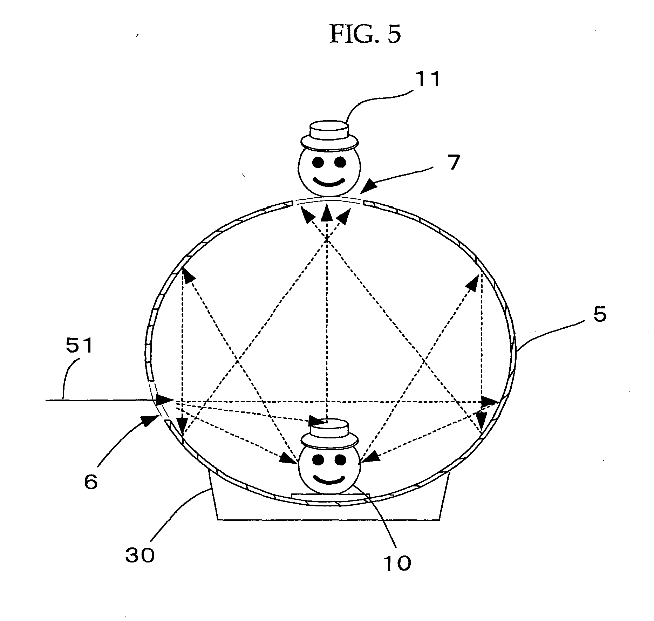

The outer shape of the curved mirror is not particularly limited, may be suitably selected in accordance with the intended use, and examples of the outer shape of the curved mirror include spherical shapes such as the one shown in FIG. 5, ellipsoidal shapes, and polygonal shapes. Each of these shapes may be used alone or in combination with two or more. Further, the curved mirror may include different shapes such as notches at a part thereof. Further, as shown in FIG. 2, the curve mirror may have an outer shape in which base 30 for supporting the curved mirror 5 at the bottom of the curved mirror 5.

The mirror surface formed inside the curved mirror is not particularly limited, provided that the mirror surface has a smooth surface without concave and convex, and may be suitably selected in accordance with the intended use. For example, when using metal for the mirror surface, there are mirror surfaces that have been subjected to a surface polishing treatment such as buffing, and Chemical Bight Dip Finish; and a surface treatment such as plating. When using plastic for the mirror surface, those that have been subjected to a metal-vapor deposition treatment on the surface thereof may be used. The method of the vapor deposition treatment is not particularly limited, may be suitably selected in accordance with the intended use, and examples thereof include vacuum evaporation method, resistance heating evaporation method, chemical vapor deposition method, and physical vapor deposition method. Of these vapor deposition methods, chemical vapor deposition methods in which a sample is placed in a gas material atmosphere to form a layer on the surface of the sample, and the physical vapor deposition methods in which a sample is made to physically adhere on the base surface are preferably used. Examples of the chemical vapor deposition method include plasma chemical vapor deposition (CVD) methods, laser CVD methods, heat CVD methods, and gas source CVD methods. Examples of the physical vapor deposition method include physical vapor deposition (PVD) methods in which particles are produced by vaporizing or sputtering a raw material, and the particles are made to adhere on a sample to yield a layer. Of these vapor deposition methods, physical vapor deposition (PVD) methods are more preferable in which a layer is physically formed by using a sputtering target formed with metal, and sputtering the sputtering target under reduced pressure through the use of a sputtering apparatus.

The production method of the curved mirror is not particularly limited and may be suitably selected in accordance with the intended use. For example, when using a sheet metal material, there are drawing, press working, bending, embossing, and cold drawing. Of these methods, press working using a die, spinning, and bending, or the like are preferable in terms of excellent processability. By using a die, it is possible to uniformly form and produce curved mirrors with high accuracy without variations in formability of the products. When molding method is used, there are shell mold methods. When a plastic material is used, there are injection molding using a die, compression molding using hot press, cast-molding in which a raw material is poured into a mold, and cast kit. Of these methods, injection molding method using a die is preferable in terms of mass-productivity and capability of forming a product with uniformity.

The joining method of a curved mirror formed in a split structure such as the mirror split in a bilateral symmetry structure is not particularly limited, provided that mechanical strength is assured, and may be suitably selected in accordance with the intended use. Examples of the joining method include welding, fitting, joining with screws, adhesive joining, and solvent welding. Each of these joining methods may be used alone or in combination with two or more. When the curved mirror is made from metal, the joining method is preferably welding, fitting, and joining with screws. When the curved mirror is made from plastic, the joining method is preferably adhesive joining, solving welding, and joining with screws.

The welding is not particularly limited, may be suitably selected in accordance with the intended use, and examples of the welding include spot welding, arc welding, laser welding, and laser-arc composite welding. Of these welding methods, fillet welding by means of arc welding is preferably used in terms of workability and in that the welding

width can be formed in small lengths while ensuring the mechanical strength.

For the fitting, for example, when the curved mirror has a structure split into two segments, there is a method in which a fitting aperture is formed at the under curved mirror 5b, a fitting part is formed at the upper of the curved mirror 5a, and the fitting part formed at the curved mirror 5a is fitted in the fitting aperture formed at the curved mirror 5b.

For the joining with screws, for example, there is a method in which a nut is mounted on the under curved mirror 5b, a screw is mounted on the upper of the curved mirror 5a, the screw mounted at the curved mirror 5a is engaged to the nut mounted at the curved mirror 5b.

- Recording Object -

The recording object is not particularly limited and may be suitably selected in accordance with the intended use. For example, the recording object may be a one-dimensional one (those capable of extending only in the longitudinal direction), a two-dimensional one (planar one), or a three-dimensional one (stereoscopic one). Since the hologram recording method of the present invention is a method in which a beam is irradiated to almost entire of the real thing to form a virtual image in the same shape as the real thing at a position away from the real thing, and the virtual image is recorded, the recording object may be formed in any shapes.

The size of the recording object is not particularly limited, provided that the recording object has a size that a laser beam can be irradiated, and may be suitably selected in accordance with the intended use. For example, the size of the recording object is preferably 1 mm to 100 mm. When the size of the recording object is less than 1 mm, it may be difficult to visually view the object even when the hologram record is reproduced. When the size of the recording object is more than 100 mm, the laser beam to be irradiated to the recording object is required to be in a large amount, which is not preferable as a simple hologram recording method.

The surface of the recording object is not particularly limited, may be suitably selected in accordance with the intended use, and the surface of the recording object may have metallic glossiness or may be a coarse surface with concaves and convexes formed thereon.

The shape of the recording object is not particularly limited and may be suitably selected in accordance with the intended use, provided that a certain shape can be retained for a given length of time. For example, the recording object may be housed in a container such as a water glass when the recording object is a liquid or a gas.

- Reference Beam Irradiating Unit -

The reference beam irradiating unit is a unit which is configured to use the reflected beam from the half mirror as a reference beam to make the reflected beam incident on the substrate surface which is disposed on the opposite side of the photosensitive material with respect to the photosensitive surface.

To use the reflected beam as a reference beam, as shown in FIG. 2, reflected beam 4 is reflected to mirror 15 to make the reflected beam incident to beam expanders 45 and 46, the reflected beam is transformed into parallel beam 52 having a given width with aperture 47 for effectively irradiating the reference beam, the parallel beam 52 is reflected on mirror 16 to make the reflected beam, namely, reference beam 53 incident on the substrate surface which is disposed on the opposite side of the photosensitive material with respect to the photosensitive surface. For beam expanders 45 and 46, and the aperture 47, it is preferred that the same type ones as used for the object beam be used to conform optical properties of the object beam and the reference beam as much as possible. By using a plurality of devices that are same as these devices, it is possible to form a plurality of reference beams and to irradiate the formed reference beams to the substrate surface disposed on the opposite surface of the photosensitive material with reference to the photosensitive surface from different directions. By irradiating a plurality of reference beams, a larger amount of reference beams can be sufficiently irradiated, and holograms having higher quality images can be produced.

To vary the incident angle of the reference beam irradiation to the photosensitive material 25, the mirror 16 is designed to be movable in parallel with the optical axis of the parallel beam 52 (in the direction represented by arrow A) and to be rotatable around the axis which is perpendicular to the sheet of paper (in the direction represented by arrow B). Since the mirror 16 is designed as just described above, it is possible to make the reference beam 53 reflected by the mirror 16 irradiated to the photosensitive material 25 at a preferable angle, namely, at an angle being suitably fine-tuned such that an acute angle formed by the optical axis of the object beam and the optical axis of the reference beam is ranging from 10°C to 80°C by moving the mirror 16 in the direction represented by arrow A relative to the parallel beam 52 and by suitably rotating the mirror 16 in the direction represented by arrow B.

- Interference Fringe Generating Unit -

The interference fringe generating unit is a unit which is configured to irradiate the reference beam to the object beam image forming on the photosensitive surface from a different direction to overlap both of the object beam and the

reference beam to thereby form interference fringes.

When the object beam and the reference beam are individually irradiated from a different direction, and these beams are overlapped on the photosensitive surface of the photosensitive material, interference of beams, namely, interference intensifying each other and interference weakening each other, is induced to generate interference fringes comprising optical concentration on the parallel surfaces which are parallel to the vertical surfaces being perpendicular to the beam traveling direction. When the cycle of the beam concentration is defined as A, it is represented by the following equation:

$$\Lambda = \lambda/2 \sin(\theta/2)$$

In the equation, λ represents a wavelength of the beam, and θ represents an acute angle formed by the optical axis of the object beam and the optical axis of the reference beam. For example, when a He-Ne laser beam having a wavelength of 632. 8 nm is used for the beam from the light source, and θ is set at 45°, the cycle of the optical concentration A is information having a microscopic structure of 0.9μm. The acute angle θ is preferably 10° to 80°. When the acute angle is less than 10°, the value A is increased because of the value λ is a constant value, and the cycle of concentration of the interference fringes is longer, which may cause a lack of sharpness of images. When the acute angle is more than 80°, contrary to the above, the cycle of concentration of the interference fringes is excessively shorter, and a photosensitive material responding to such a microscopic structure may not be available.

The parallel surfaces induced by the interference fringes are multiply generated in the beam traveling direction, and the interval of the parallel surfaces is determined depending on the wavelength of the beam used, the distance between the recording object and the photosensitive material, and the reflected position of the recording object. The interference fringes include the intensity of the reflected object beam from the recording object (brightness of the object beam) and the phase of the reflected object beam (information from which the object beam is coming), and the interference fringes are recorded on the photosensitive surface of the photosensitive material in a shape that the interference fringes are formed as they are. In other words, the concentration of the interference fringes is recorded on the photosensitive surface of the photosensitive material, the concentration of the interference fringes is recorded in the same manner on a first parallel surface formed at the same interval as the interval in the thickness direction of the photosensitive material, and the concentration of interference fringes is recorded in the same manner on a second parallel surface further formed at the same interval in the thickness direction of the photosensitive material. Then, the concentration of the interference fringes is multiply recorded in the thickness direction of the photosensitive material as much as possible in sequence.

To reproduce the thus recorded hologram, a white light beam is irradiated as a reproduced beam to the opposite surface of the photosensitive material with respect to the photosensitive surface, namely, from the same direction as the direction to which the reference beam is irradiated. Diffracted beams corresponding to the recorded interference fringes are generated by the irradiation. These diffracted beams have the same intensity and the same phase as those of the object beam generated on the photosensitive surface at the time of recording.

Since the interference fringes recorded on the photosensitive material are multiply recorded in the thickness direction of the photosensitive material, the reproduced beam hits against the interference fringes recorded on the photosensitive surface of the photosensitive material to induce diffracted beams from the photosensitive surface of the photosensitive material, and further, a first diffracted beam is generated from the first parallel surface formed at the interval, and a second diffracted beam is generated from the second parallel surface. Then the diffracted beam is multiply generated in sequence. Since these diffracted beams are produced at a distance in the thickness direction of the photosensitive material, an optical path difference arises between the diffracted beam on the photosensitive surface and the first diffracted beam, however, when the optical path difference is represented as an integral multiple of the wavelength of the optical beam, these diffracted beams are reinforced to be one diffracted beam which is referred to as monochromatization (reflection of Bragg law). For the reason, even when a white light beam in which lights having different wavelengths are mixed is used as a reproduced beam, the monochromatization of diffracted light beams arises, therefore, it is possible to produce a diffracted beam just as in the case where a laser beam irradiated to the original image is used as a reference beam and to clearly reproduce the original stereoscopic image, as well as to visually and clearly view a stereoscopic image of the recording object in a state where the stereoscopic image floats on the stand plate.

- Interference Fringe Recording Unit -

The interference fringe recording unit is a unit which is configured to record interference fringes generated by the interference fringe generating unit on the photosensitive material. In the recording, it is preferred that other beams having other wavelengths be not mixed in the reference beam, and therefore, it is preferred to record interference fringes

in a dark room.

The composition of the photosensitive material is not particularly limited and may be suitably selected in accordance with the intended use. For example, the photosensitive material may comprise one material singularly or a combination of two or more materials.

The layer structure of the photosensitive material is not particularly limited and may be suitably selected in accordance with the intended use. For example, the photosensitive material may have a single layer or multiple layers as a recording layer formed on a substrate.

The substrate is not particularly limited and may be suitably selected in accordance with the intended use. Examples thereof include glass plates such as soda glass plates; synthetic resin films, paper, and metal plates. When a hologram recording medium recorded by the interference fringe recording unit is used as the master hologram, a glass plate having stiffness and a high transparency or the like are preferable. When such a hologram recording medium is directly used as a hologram recording medium such as labels, and seals, synthetic resin films, paper, or the like which are convenient in handling are preferably used.

The thickness of the substrate is not particularly limited, may be suitably selected in accordance with the intended use, and for example, the thickness is preferably 10μm to 50μm, more preferably 10μm to 30μm, and particularly preferably 10μm to 20μm.

The shape of the substrate is not particularly limited, provided that the substrate is larger than the aperture 7 formed at the upper portion of the curved mirror, and may be suitably selected in accordance with the intended use. Examples of the shape of the substrate include a discotic shape having a diameter of 160 mm.

- Recording Layer -

The recording layer is the one in which information can be recorded by utilizing holography. For the recording layer, materials are used which vary optical properties such as absorption coefficient and refractive index when a laser beam having a given wavelength is irradiated to the recording layer.

The material of the recording layer is not particularly limited and may be suitably selected in accordance with the intended use, and examples thereof include (1) photopolymers which are polymerized by a polymerization reaction through photoirradiation, (2) photorefractive materials exhibiting photorefractive effect (photoirradiation generates a space charge distribution to thereby modulate the refractive index), (3) photochromic materials of which photoirradiation generates isomerization of molecules to thereby modulate the refractive index, (4) inorganic materials such as lithium niobates, and barium titanates, and (5) chalcogen materials.

The photopolymers (1) are not particularly limited and may be suitably selected in accordance with the intended use. For example, the photopolymer comprises a monomer and a photoinitiator and further comprises other components such as a sensitizer, an oligomer in accordance with the necessity.

For the photopolymer, for example, those described in the following can be used: "Photopolymer Handbook" (published by Kogyo Chosakai Publishing Inc., 1989), "Photopolymer Technology" (published by THE NIKKAN KOGYO SHIMBUN LTD., 1989), SPIE Journals and Proceedings Vol. 3010 on pp 354-372 (1997), and SPIE Journals and proceedings Vol. 3291 pp 89-103 (1998). In addition, it is also possible to use the photopolymers described in U.S. Patent Nos. 5,759,721, 4,942,112, 4,959,284, and 6,221,536; International Publication Nos. WO/97/44714, 97/13183, and 99/26112, 97/13183; Japanese Patent (JP-B) Nos. 2880342, 2873126, 2849021, and 3057082, 3161230; and Japanese Patent Application Laid-Open (JP-A) Nos. 2001-316416, 2000-275859, and the like.

Examples of the method for irradiating a recording light beam to the photopolymer to change the optical properties thereof include a method utilizing diffusion of low-molecular components. In addition, to mitigate change in volume of the photopolymer at the time of polymerization, a component diffusing in the direction opposite to the polymerized components may be added, or a compound having a structure of splitting acid may be added besides a polymer. When the recording layer is formed using a photopolymer containing the low-molecular component, it may need a structure in which a liquid can be retained in the recording layer. When the compound having a structure of splitting acid is added, the change in volume of the photopolymer may be constrained by counterbalancing expansion caused by the splitting and shrinkage caused by polymerization of a monomer.

The monomer is not particularly limited, may be suitably selected in accordance with the intended use, and examples thereof include radical polymerization monomers having a unsaturated bond such as acrylic group and methacrylic group, and cation polymerization monomers having an ether structure such as epoxy ring and oxetane ring. Each of these monomers may be monofunctional or polyfunctional. Monomers utilizing a photocrosslinking function may also be used.

The radical polymerization monomer is not particularly limited and may be suitably selected in accordance with the intended use. Examples of the radical polymerization monomer include acryloylmorpholine, phenoxyethylacrylate, isobonyl acrylate, 2-hydroxypropylacrylate, 2-ethylhexylacrylate, 1,6-hexanedioldiacrylate, tripopyleneglycol diacrylate, neopentylglycol PO-modified diacrylate, 1,9-nonanedioldiacrylate, hydroxy pivalic acid neopentylglycol diacrylate, EO-modified bisphenol A diacrylate, polyethyleneglycol diacrylate, pentaerythritol triacrylate, pentaerythritol tetraacrylate, pentaerythritol hexaacrylate, EO-modified glycerol triacrylate, trimethylol propane triacrylate, EO-modified trimethylol propane triacrylate, 2-naphtho-1-oxyethyl acrylate, 2-carbazoil-9-ethylacryate, (trimethylsilyloxy) dimethylsilylpropyl acrylate, vinyl-1-naphthoate, and N-vinyl carbazole.

The cation polymerization monomer is not particularly limited and may be suitably selected in accordance with the intended use, and examples thereof include bisphenol A epoxy resins, phenol novolac epoxy resins, glycerol triglycidyl ether, 1,6-hexane glycidyl ether, vinyltrimethoxysilane, 4-vinylphenyl trimethoxysilane, γ-methacryroxypropyl triethoxysilane, and compounds represented by the following formulas (A) to (E). Each of these monomers may be used alone or in combination with two or more.

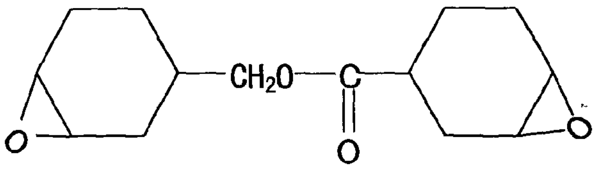

Structural Formula (A)

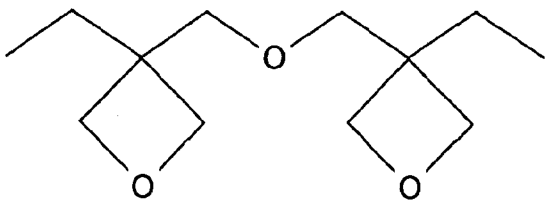

Structural Formula (B)

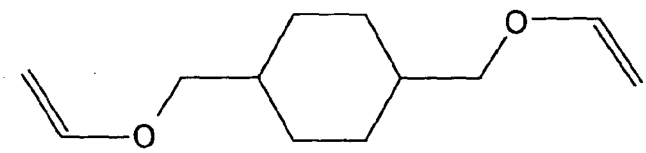

Structural Formula (C)

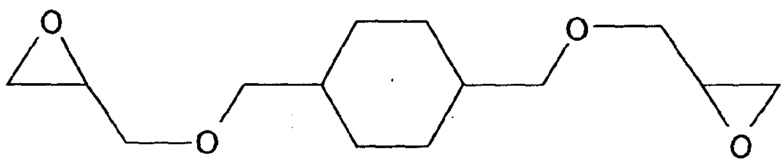

Structural Formula (D)

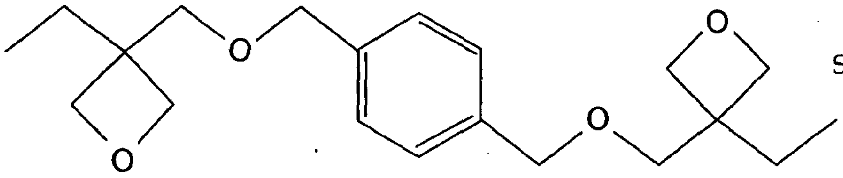

Structural Formula (E)

The photoinitiator is not particularly limited, provided that the photoinitiator is sensitive to a recording light beam, and examples thereof include materials initiating radical polymerization, cation polymerization, and crosslinking reactions.

Examples of the photoinitiator include 2,2'-bis(o-chlorophenyl)-4, 4', 5, 5'-tetraphenyl-1, 1'-biimidazole, 2, 4, 6-tris(trichloromethyl)-1, 3, 5-triazine, 2,4-bis (trichloromethyl)-6-(p-methoxyphenylvinyl)-1, 3, 5-triazine, diphenyl iodonium tetrafluoroborate, diphenyl iodonium hexafluorophosphate, 4, 4'-di-t-butylphenyl iodonium tetrafluoroborate, 4-diethylaminophenylbenzene diazonium hexafluorophotophate, benzoin, 2-hydroxy-2-methyl-1-phenylpropane-2-one, benzophenon, thioxanthone, 2, 4, 6-trimethyl benzoyl diphenyl acyl phosphine oxide, triphenyl butylborate tetraethylammonium, and titanocene compounds represented by the following structural formula. Each of these photoinitiators may be used alone or in combination with two or more. In addition, sensitizing pigments may be used along with the photoinitiator in accordance with the wavelength of light beam to be irradiated.

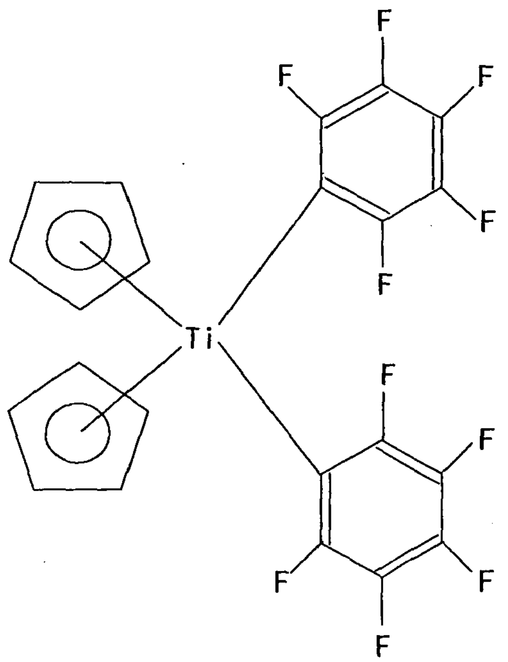

The photopolymer can be obtained by mixing and stirring the monomer, the photoinitiator, and other components in accordance with the necessity and reacting them. When the obtained photopolymer has a substantially low viscosity, a recording layer can be formed by subjecting the photopolymer to a casting. On the other hand, in the case of a photopolymer having too high viscosity to permit readily casting, a recording layer can be formed as follows. Namely, the photopolymer is dispensed on a substrate using a dispenser, a flat sheet or the like is pressed on the photopolymer just as put a lid thereon, and the flat sheet is spread over the photopolymer to thereby form a recording layer.

The photorefractive materials (2) are not particularly limited and may be suitably selected in accordance with the intended use, provided that the material can exhibit photorefractive effect. For example, the photorefractive material comprises a charge generating material, and a charge transporting material and further comprises other components in accordance with the necessity.

The charge generating material is not particularly limited, may be suitably selected in accordance with the intended use, and examples thereof include phthalocyanine dyes or pigments such as metallophthalocyanine, metal-free phthalocyanine, or derivatives thereof; naphthalocyanine dyes or pigments; azo dyes or pigments such as monoazo , disazo, and trisazo dyes and pigments; pelylene dyes or pigments; indigo dyes or pigments; quinacridone dyes or pigments; polycyclic quinine dyes or pigments such as anthraquinon, and Anthanthron; cyanine dyes or pigments; charge-transfer complexes comprising an electron acceptable substance and an electron donative substance as typified by TTF-TCNQ; azulenium salts; fullerenes as typified by $C_{60}$ and $C_{70}$, and metanofullerenes being derivatives thereof. Each of these charge generating materials may be used alone or in combination with two or more.

The charge transporting material is a material which carries holes or electrons, and may be a low-molecular compound or a high-molecular compound.

The charge transporting material is not particularly limited, may be suitably selected in accordance with the intended use, and examples thereof include nitrogen-containing cyclic compounds such as indoles, carbazoles, oxazoles, inoxazoles, thiazoles, imidazoles, pyrazoles, oxadiazoles, pyrazolines, thiadiazoles, and triazoles or derivatives thereof; hydrazoline compounds; triphenyl amines; triphenylmethanes; butadienes; stilbenes; quinon compounds such as anthraquinon diphenoquinons or derivatives thereof; fullerenes such as $C_{60}$ and $C_{70}$ and derivatives thereof; $\pi$ conjugate high polymers or oligomers such as polyacetylenes, polypyrroles, polythiophenes, and polyanilines; $\sigma$ conjugate high polymers or oligomers such as polysilanes, and polygermanes; and polycyclic aromatic compounds such as anthracenes, pyrenes, phenanthrenes, and coronenes. Each of these charge transporting materials may be used alone or in combination with two or more.

For the method of forming a recording layer using the photorefractive material, for example, a coating solution in which the photorefractive material is dissolved and dispersed in a solvent is used to prepare a coated film, and the solvent is removed from the coated film to thereby form a recording layer. It is also possible to form a recording layer as follows. The photorefractive material is heated to be liquidized, and used to form a coated film, and the coated film is quenched to thereby form a recording layer.

The photochromic materials (3) are not particularly limited, provided that the material enables inducing a photochromic reaction, and may be suitably selected in accordance with the intended use. Examples of the photochromic materials include azobenzene compounds, stilbene compounds, indigo compounds, thioindigo compounds, spiropyran compounds, spirooxazine compounds, fulgide compounds, anthracenes compounds, hydrazone compounds, and cinnamic acid compounds. Of these compounds, azobenzene derivatives, and stilbene derivatives which photoirradiation induces changes in the structure by means of cis-trans isomerism; and spiropyran derivatives, and spirooxazine compounds which photoirradiation induces changes in the structure of ring-opening and ring-closure are particularly preferable.

Examples of the chalcogen materials (5) include materials containing a chalcogen element-containing chalcogenide glass and metallic particles which are dispersed in the chalcogenide glass and comprise a metal capable of diffusing in the chalcogenide glass by photoirradiation.

The chalcogenide glass is not particularly limited, provided that it comprises a nonoxide amorphous material containing a chalcogen element of S, Te, or Se, and photodoping of the metallic particles can be performed.

Preferred examples of the amorphous material containing a chalcogen element include Ge-S glasses, As-S glasses, As-Se glasses, and As-Se-Ce glasses. Of these glasses, Ge-S glasses are preferably used. When Ge-S glass is used for the chalcogenide glass, the elemental ratio Ge and S constituting the glass can be arbitrarily changed in accordance with the wavelength of light beam to be irradiated, however, primarily, chalcogenide glasses having a chemical composition represented by $GeS_2$ are preferably used.

The metallic particles are not particularly limited, provided that the metallic particles have a property capable of being photodoped in the chalcogenide glass by photoirradiation, and may be suitably selected in accordance with the intended use. Examples of the metallic particles include Al, Au, Cu, Cr, Ni, Pt, Sn, In, Pd, Ti, Fe, Ta, W, Zn, and Ag. Of these, Ag, Au, or Cu respectively has a property of being more susceptible to photodoping, and Ag is particularly preferable because of conspicuous susceptibility to photodoping.

The content of the metallic particles dispersed in the chalcogenide glass is, based on the entire volume of the recording layer, preferably 0.1% by volume to 2% by volume, and more preferably 0.1% by volume to 1.0% by volume. When the content of the metallic particles is less than 0.1% by volume, the transmitance change by photodoping is inadequate, which may degrade the accuracy of recording. When the content of the metallic particles is more than 2% by volume, the light beam transmittance of the recording material lowers, and it may be difficult to make the chalcogenide glass photodoped adequately.

The recording layer can be formed in accordance with the used material by a method known in the art, however, the recording layer can be suitably formed by, for example, vapor deposition method, wet deposition method, MBE (molecular beam epitaxy) method, cluster ion beam method, molecular lamination method, LB (Langumuir-Blodgett) method, printing method, and transcription method. Of these method, vapor deposition method, and wet deposition method are preferable.

The vapor deposition method is not particularly limited and may be suitably selected in accordance with the intended use, and examples thereof include vacuum evaporation method, resistance heating evaporation method, chemical vapor deposition method, and physical vapor deposition method. Examples of the chemical vapor deposition method include plasma CVD method, laser CVD method, heat CVD method, and gas source CVD method.

The recording layer by means of the wet deposition method can be suitably formed by, for example, using a coating solution in which the recording layer material is dissolved and dispersed in a solution, coating the coating solution, and drying. The wet deposition method is not particularly limited, may be suitably selected from those known in the art in accordance with the intended use, and examples thereof include ink-jet method, spin coating method, kneader coating method, bar coating method, blade coating method, casting method, dipping method, and curtain coating method.

The thickness of the recording layer is not particularly limited, may be suitably selected in accordance with the intended use, and the thickness is preferably 1μm to 1,000μm, and more preferably 100μm to 700μm.

When the thickness of the recording layer is within the preferred range, it is advantageous in that generated interference fringes can be recorded just as they are, and higher quality of images can be obtained at the time of reproducing.

- Other Units -

The other units are not particularly limited and may be suitably selected in accordance with the intended use. For example, when the photosensitive material is directly used as a hologram recording medium such as a label and a sheet, there are systems which are configured such that a mechanism of attaching and detaching the photosensitive material is automated, an attachment to which the hologram recording medium is attached is mounted, controlling of feeding the recording medium is enabled by a stepping motor to control the timing of placement of a recording object and the timing of irradiations of the object beam and the reference beam then to automatically record and transport the recording object to thereby automatically perform the recording sequentially.

- Hologram Recording Medium -

The hologram recording medium is not particularly limited, may be suitably selected in accordance with the intended use, and examples thereof include those recorded on glass plates each having a recording layer, and those recorded on labels, seals, or the like each having a recording layer.

- Reproduction of Hologram -

To reproduce the recorded hologram as described above, a white light beam is irradiated to the opposite surface of the photosensitive material with reference to the photosensitive surface, namely, the white light beam is irradiated as a reproduced beam from the same direction as the incident direction of the reference beam. The irradiation induces diffracted beams corresponding to the recorded interference fringes. The diffracted beams have the same intensity and phase as those of the object beam induced on the photosensitive surface at the time of recording. Since the interference fringes recorded on the photosensitive material is multiply recorded in the thickness direction of the photosensitive material, the reproduced beam hits against the interference fringes recorded on the photosensitive surface of the photosensitive material to generate diffracted beams from the photosensitive surface, and further, a first diffracted beam from the first parallel surface formed at the interval, and a second diffracted beam from the second parallel surface formed at the interval are multiply generated in sequence. Since these diffracted beams are formed at a distance in the thickness direction of the photosensitive material, an optical path difference, namely, a difference in distance of optical path, arises between the diffracted beam on the photosensitive surface and the first diffracted beam, however, when the optical path difference is represented as an integral multiple of the wavelength of the optical beam, these diffracted beams are reinforced to be one diffracted beam which is referred to as monochromatization (reflection of Bragg law). For the reason, even when a white light beam in which lights having different wavelengths are mixed is used as a reproduced light beam, the monochromatization of diffracted light beams arises, therefore, it is possible to produce a diffracted beam just as in the case where a laser-beam irradiated to the original image is used as a reference beam and then to clearly reproduce the original stereoscopic image, as well as to visually and clearly view a stereoscopic image of the recording object in a state where the stereoscopic image floats on the stand plate.

A full color image can be obtained by using an object beam having three wavelengths which comprise a wavelength selected from wavelengths of 400 nm or more and less than 500 nm, a wavelength selected from wavelengths of 500 nm or more and less than 600 nm, and a wavelength selected from wavelengths of 600 nm to 700 nm, irradiating the object beam virtually simultaneously to almost all the surface of the recording object, making a reference beam having the three wavelengths to the opposite surface of the photosensitive material with respect to the photosensitive surface. In the case of a full-color hologram recording, a white light beam is also used as a reproduced beam, and reflections based on the Bragg law are generated for each individual colors, therefore, it is possible to reproduce a recorded hologram as a full-color hologram.

In the hologram recording apparatus of the present invention, as shown in FIG. 3, a curved mirror can be formed in a bilateral symmetry structure at top and bottom thereof. A fitting part is formed at each of the entire circumference of the circumferential edge portion of an opening of the upper curved mirror 5a and an opening of the under curved mirror 5b, and the upper curved mirror 5a can be fitted into the under curved mirror 5b to be integrally combined each other. The fitting can be formed detachably such that the fitting is detached when the recording object 10 is laid. Particularly when a focal point of a parabola of the under curved mirror 5b is formed so as to be the center point of virtual image 11 of the recording object 10, the reflected object beam 51 can be concentrated to form an image. Just as in the under curved mirror 5b, the upper curved mirror 5a may also be a parabolic curved mirror formed by a parabola, however, the upper curved mirror 5a may not necessarily be parabolic, provided that it is formed in a shape that the reflected beam can be effectively re-reflected, concentrated, and enables forming an image. Thus, the upper curved mirror 5a may be formed in a concaved shape, a non-spherical shape, or an ellipsoidal shape.

With respect to the aperture 6, a semicircular notch part is respectively formed at a portion of the side surface having the fitting part on the upper curved mirror 5a and the under curved mirror 5b. The upper curved mirror 5a and the under curved mirror 5b are integrally combined each other at top and bottom to thereby constitute the aperture 6 in circular form. The object beam 51 is irradiated from the aperture 6, and as shown by arrows in FIG. 3, reflections and re-reflections of the object beam are appropriately repeated inside the curved mirror 5, and the reflected object beams 51 are concentrated on the aperture 7 to thereby enable to form an image.

The hologram recording unit of the present invention may be formed, as shown in FIG. 4, in a tetrahedral symmetry structure at the left, right, top and bottom thereof. Four curved mirrors of upper curved mirrors 5a and 5c, and under curved mirrors 5b and 5c are formed, and these curved mirrors are combined to thereby integrally constitute a curved mirror.

In the case of a curved mirror formed in the tetrahedral symmetry structure, the upper curved mirrors 5a and 5c, and the under curved mirrors 5b and 5d are respectively joined, and just as in the curved mirror formed in a bilateral symmetry structure, a fitting part is formed at each of the entire circumference of the circumferential edge portion of an opening of the upper curved mirror 5a and an opening of the under curved mirror 5b, and the upper curved mirror 5a can be fitted into the under curved mirror 5b to be integrally combined each other. Just as in the bilateral symmetry structure, particularly when focal points of parabolas of the under curved mirror 5b and 5d are formed so as to be the center point of the virtual image 11 of the recording object 10, the reflected object beam 51 can be concentrated to form an image. Similarly, the upper curved mirrors 5a and 5c may also be parabolic curved mirrors respectively formed by a parabola. The upper curved mirrors 5a and 5c may not necessarily be parabolic, provided that it is formed in a shape that the reflected beam can be effectively re-reflected. Thus, the upper curved mirrors 5a and 5c may be formed in a concaved shape, a non-spherical shape, or an ellipsoidal shape. Aperture 6 is formed at a portion of the side surface on the curved mirror 5, and the object beam 51 is irradiated from the aperture 6, and as shown by arrows in FIG. 4, the object beam 51 is appropriately reflected and re-reflected inside the curved mirror 5, and the reflected object beams 51 are concentrated on the aperture 7 to form an image.

In addition, it is also possible to further split the curved mirror into 5 segments or more. By designing a curved mirror split into 5 segments or more such that only a part of the split parts is allowed to detachably mounted, the recording object 10 can be placed and taken out from the part, when the part of the split parts is removed.

In the hologram recording apparatus of the present invention, the curved mirror may be formed, as shown in FIG. 5, in a spherical shape. The aperture 6 is formed at part of the downward area of the spherically shaped curved mirror 5, and the aperture 7 is formed at the upper portion of the curved mirror 5. It is preferred that the curved surface shape of the under hemisphere part of the sphere be formed in a curved surface such that beams reflected on the curved surface concentrates on the aperture 7. With such a curved surface shape, the object beam 51 is irradiated from the aperture 6, and as shown by arrows in FIG. 5, reflections and re-reflections of the object beam are appropriately repeated inside the curved mirror 5, and the reflected object beams 51 are concentrated on the aperture 7 to thereby enable to form an image. By forming several apertures on the curved mirror and irradiating an object beam from each of these individual apertures, more amount of object beam can be irradiated, which enables to obtain holograms having a higher quality image.

Examples

Hereinafter, the present invention will be described in detail referring to specific examples, however, the present invention is not limited to the disclosed examples.

Example 1

- Production of Hologram Recording Apparatus -

The hologram recording apparatus produced in Example 1 is schematically shown in FIG. 2.

--- Object Beam System and Reference Beam System ---

Laser oscillator 40 is a He-Ne semiconductor laser oscillator having a rating of 10mW. The laser oscillator was used as a light source for the object beam system and the reference beam system. The oscillation wavelength of the laser beam was set at 632.8 nm. A plate type non-polarized half mirror was used for half mirror 2 in which the ratio of the amount of reflected beams to the amount of transmitted beams was split at a ratio of 1:1.

Galileo beam expanders each using two sheets of ZnSe lenses were used for beam expanders 41 and 42, and 45 and 46.

For apertures 43, and 47, aperture plates HOM-4.0 (having an aperture diameter of 4 mm, a circular form, manufactured by OFR Inc.) were used.

For mirror 15, a plane mirror with no concave convex formed thereon was used, and a similar plane mirror was used for mirror 16. A horizontal displacement mechanism and a rotation mechanism are mounted on the back surface of the mirror 16 such that the angle of incidence of which the reference beam 53 is irradiated to the surface of the photoconductive material 25 on which a substrate is disposed adjusted. By means of the horizontal displacement mechanism and the rotation mechanism, the reference beam 53 can be irradiated to a desired range at a desired angle, and suitably formed interference fringes induced by the object beam 51 and the reference beam 53 can be obtained.

- Preparation of Curved Mirror -

The curved mirror was formed, as shown in FIG. 3, in a bilateral symmetry structure at top and bottom such that the upper curved mirror 5a and the under curved mirror 5b were enabled to be detachably fitted each other.

Both of the curved surfaces of the upper curved mirror 5a and the under curved mirror 5b were bowl-like shaped parabolic curve mirrors in which a parabola is rotated.

The outer shape of the upper curved mirror 5a of the parabolic curve mirror was set to have a diameter of 560 mm and a depth of 100 mm. Similarly, the outer shape of the under curved mirror 5b thereof was set to have a diameter of 560 mm, and a depth of 100 mm.

Circular aperture 6 having a diameter of 8 mm was formed at a portion around the circumferential surface with a center focus on the split part of the upper of the curved mirror 5a and the under curved mirror 5b in a condition where the curved mirrors 5a and 5b were integrally fitted each other. Aperture 7 having a diameter of 150 mm was formed with a center focus on the center portion of the parabola of the upper curved mirror 5a.

Each of the curved mirrors 5a and 5b was prepared by means of injection molding using a die which was prepared with ABS resin as the material.

The parabolic curve part of the inner surface thereof was subjected to a mirror finish in the die so as to have a smooth mirror surface when formed, and the prepared mirror surface was subjected to an aluminum deposition by sputtering using a sputtering target formed with aluminum under reduced pressure using a sputtering apparatus.

For stand 12, a transparent acrylic resin was used, and the acrylic resin was processed into a discotic shape having a board thickness of 3 mm and a diameter of 80 mm and then joined to the center portion of the parabola of the under curved mirror 5b.

Base 30 having a flat bottom to hold the under curved mirror 5b was set under the under curved mirror 5b.

- Recording Object -

With respect to the recording object 10, a spherically shaped doll which enables to obtain stereoscopic effect was used and placed on the stand 12 not so as to be moved. Since each of these curved mirrors 5a and 5b are detachably fitted each other, the recording object 10 was first placed on the stand 12, and then the curved mirror 5a was fitted into the curved mirror 5b as covered with the curved mirror 5a to thereby set the curved mirrors 5a and 5b.

- Preparation of Photosensitive Material -

As a substrate of the photosensitive material, a soda glass plate having a thickness of 2 mm was processed into a discotic form having a diameter of 160 mm. The following materials for the recording layer were disposed on the substrate in a laminar structure. As the materials for the recording layer, a photopolymer coating solution having the

following composition was prepared.

< Composition of Photopolymer Coating Solution >

- Di(urethane acrylate) oligomer (ALU-351, manufactured by Echo Resins Inc.) 59 parts by mass
- Isobonyl acrylate 30 parts by mass
- Vinylbenzoate 10 parts by mass
- Polymerization initiator (IRGACURE 784, manufactured by Chiba Specialty Chemicals Co., Ltd.) 1 part by mass

The obtained photopolymer coating solution was directly coated on the substrate using a spin-coater to form a recording layer having a thickness of 500μm on the substrate. The thus obtained photosensitive material was detachably fixed such that the surface of the photosensitive material with the recording layer disposed thereon faces to the recording object on the internal side of the curved mirror 5 to uniformly cover the aperture 7 of the curved mirror 5a.

- Irradiation of Object Beam and Reference Beam -

As shown in FIG. 2, the object beam 51 was made incident to the aperture 6. The object beam 51 directly hit against the recording object 10, the reflected beam was made incident on the photosensitive surface of the photosensitive material 25 to once reflect on the curved mirrors 5a and 5b then to hit against the recording object 10, the reflected beam thereof was made incident on the photosensitive surface of the photosensitive material 25, the reflected beam reflected to the recording object 10 was further reflected on the curved mirror 5a and 5b to make the reflected beam incident on the photosensitive surface. All the irradiation incident beams were concentrated on the photosensitive surface to form virtual image 11. The virtual image 11 appeared visually as the same three-dimensional shape as the recording object 10 when viewed from any directions and any angles, and appeared that the recording object 10 floated on the aperture 7.

On the other hand, the reference beam 53 was irradiated from the substrate surface side of the photosensitive material 25, as shown in FIG. 2, such that the acute angle formed by the central axis parallel to the incident beam of the virtual image 11 and the optical axis of the reference beam 53 was 45°.

- Recording of Interference Fringes -

Irradiation of the object beam 51 and the reference beam 53 was performed virtually simultaneously to form interference fringes on the photosensitive surface. The interference fringes induced the exposure effect to the recording layer of the photosensitive material to cure the recording layer by means of a photopolymerization reaction to be recorded on the recording layer. When the cycle of the concentration of the interference fringes is represented as A, the cycle is represented by the following equation: $A = \lambda/2\sin(0/2)$. In the equation, $\lambda$ represents the wavelength of the light beam, and $\theta$ represents the acute angle by the object beam and the reference beam. Since a He-Ne laser beam having a wavelength of 632.8 nm was used for the light beam from the light source and the value $\theta$ was 45°, the value A was 0.9μm and recorded on the recording layer as information having a microscopic structure. The interference fringes were multiply recorded at a regular interval in the thickness direction of the photosensitive material. The interference fringes were observed by a scanning electron microscope (SAM).

- Reproduction of Hologram -

A white light (fluorescent light) was irradiated as a reproduced beam to the opposite surface of the photosensitive material 25 on which the photosensitive surface was disposed, namely, from the same direction as the incident direction of the reference beam. Diffracted beams corresponding to the recorded interference fringes were induced by the irradiation, a recording object similar to the virtual image 11 induced on the photosensitive surface at the time of recording was reproduced on the photosensitive material 25, and the virtual image 11 of the recording object appeared to float on the photosensitive material 25 from the bottom thereof and was clearly viewed as a microscopic image which was the same as the original recording object 10 in the range of 360° vertically and circumferentially.

According to the present invention, it is possible to provide a hologram recording method which enables obtaining floating and high-quality images which can be stereoscopically viewed from wide viewing angles of 360° in a low-cost and simple production method as well as to provide a hologram recording apparatus and a hologram recording medium using the hologram recording method.

The hologram recording method and a hologram recording medium and a hologram recording apparatus utilizing

the hologram recording method can be suitably applied to not only hologram imaging, Ripman hologram, Denishuk hologram, and rainbow hologram technologies and hologram forming technologies using computers but also radio holography except for light waves, electron beam holography, and the like.

In addition, since the present invention enables clearly reproducing holograms using a white light, the present invention can be suitably used for labels and sheets such as for log marks, character goods, and packages, as well as for preventing unauthorized copies and counterfeit for the purpose of security, color holograms, rainbow holograms, and the like. These holograms are also suitably used for improvements of advertising effectiveness and entity images, as well as for security, because they ensure high quality images and are stereoscopically viewed from wide view angles.

## Claims

**1.** A hologram recording method comprising:

irradiating a coherent object beam virtually simultaneously to almost all the surface of a recording object to make the reflected object beam from the surface of the recording object incident on a photosensitive surface of a photosensitive material,
making a coherent reference beam incident on the opposite surface of the photosensitive material with respect to the photosensitive surface to generate interference fringes by the object beam and the reference beam, and recording the interference fringes on the photosensitive material.

**2.** The hologram recording method according to claim 1, wherein the object beam incident on the photosensitive surface is a reflected beam from the recording object and a re-reflected beam which is formed by means of the reflected beam on a reflector.

**3.** The hologram recording method according to any one of claims 1 to 2, wherein the object beam incident on the photosensitive surface concentrates on and around the photosensitive surface of the photosensitive material to form an image.

**4.** The hologram recording method according to any one of claims 1 to 3, wherein the acute angle formed by the optical axis of the object beam and the optical axis of the reference beam is 10° to 80°.

**5.** The hologram recording method according to any one of claims 1 to 4, wherein the beam from a light source is split into an object beam and a reference beam by a beam splitting unit to thereby generate the coherent object beam and the coherent reference beam.

**6.** The hologram recording method according to any one of claims 2 to 5, wherein the reflector comprises a hollow body having an aperture through which the object beam irradiated to the recording object passes, and an aperture through which the reflected beam from the recording object and the re-reflected beam which is formed by means of the reflected beam on the reflector pass, and the hollow body has a mirror surface on the inner surface.

**7.** The hologram recording method according to any one of claims 2 to 6, wherein the reflector comprises two or more reflectors.

**8.** The hologram recording method according to any one of claims 2 to 7, wherein the reflector is a curved mirror.

**9.** The hologram recording method according to claim 8, wherein the curved mirror facing to the photosensitive surface is at least one selected from concave spherical reflectors, concave non-spherical reflectors, concave parabolic curve reflectors, and concave ellipsoidal reflectors.

**10.** The hologram recording method according to claim 8, wherein part of the curved mirror has a shape other than that of the curved mirror according to claim 9.

**11.** The hologram recording method according to any one of claims 8 to 10, wherein the curved mirror has a plane symmetry with reference to a surface which comprises an axis passing through the center of the curved mirror and being perpendicular to the center part of the curved surface.

**12.** The hologram recording method according to any one of claims 5 to 11, wherein the beam from the light source is

a laser beam having one wavelength or more selected from wavelengths of 360nm to 850nm.

**13.** The hologram recording method according to any one of claims 1 to 12, wherein an object beam having three wavelengths which comprise one wavelength selected from wavelengths of 400nm or more and less than 500 nm, one wavelength selected from wavelengths of 500 nm or more and less than 600 nm, and one wavelength selected from wavelengths of 600 nm to 700 nm is irradiated virtually simultaneously to almost all the surface of the recording object, and a reference beam having three wavelengths which comprise one wavelength selected from wavelengths of 400nm or more and less than 500 nm, one wavelength selected from wavelengths of 500 nm or more and less than 600 nm, and one wavelength selected from wavelengths of 600 nm to 700 nm is made incident on the opposite surface of the photosensitive material with respect to the photosensitive surface.

**14.** A hologram recording apparatus comprising:

an object beam irradiating unit configured to irradiate a coherent object beam virtually simultaneously to almost all the surface of a recording object to make the reflected object beam from the surface of the recording object incident on a photosensitive surface of a photosensitive material,
a reference beam irradiating unit configured to make a coherent reference beam incident on the photosensitive surface of the photosensitive material,
an interference fringe generating unit configured to generate interference fringes by the object beam and the reference beam, and
an interference fringe recording unit configured to record the interference fringes on the photosensitive material.

**15.** The hologram recording apparatus according to claim 14, wherein the object beam irradiating unit is configured to make the reflected object beam from the recording object and a re-reflected beam which is formed by means of the reflected beam on a reflector incident on the photosensitive surface of the photosensitive material.

**16.** The hologram recording apparatus according to any one of claims 14 to 15, wherein the object beam irradiating unit is configured to concentrate the object beam incident on the photosensitive surface of the photosensitive material on and around the photosensitive surface to form an image.

**17.** The hologram recording apparatus according to any one of claims 14 to 16, wherein the reference beam irradiating unit is configured to make the reference beam incident on the photosensitive surface at an acute angle formed by the optical axis of the object beam incident on the photosensitive surface and the optical axis of the reference beam of 10° to 80°.

**18.** The hologram recording apparatus according to any one of claims 14 to 17, wherein the object beam and the reference beam are respectively a coherent object beam and a coherent reference beam each of which is formed by splitting the beam from a light source by the beam splitting unit.

**19.** The hologram recording apparatus according to any one of claims 15 to 18, wherein the reflector comprises a hollow body having an aperture through which the object beam irradiated to the recording object passes, and an aperture through which the reflected beam from the recording object and the re-reflected beam which is formed by means of the reflected beam on the reflector pass, and the hollow body has a mirror surface on the inner surface.

**20.** The hologram recording apparatus according to any one of claims 15 to 19, wherein the reflector comprises two or more reflectors.

**21.** The hologram recording apparatus according to any one of claims 15 to 20, wherein the reflector is a curved mirror.

**22.** The hologram recording apparatus according to claim 21, wherein the curved mirror facing to the photosensitive surface is at least one selected from concave spherical reflectors, concave non-spherical reflectors; concave parabolic curve reflectors, and concave ellipsoidal reflectors.

**23.** The hologram recording apparatus according to claim 21, wherein part of the curved mirror has a shape other than that of the curved mirror according to claim 22.

**24.** The hologram recording apparatus according to any one of claims 21 to 23, wherein the curved mirror has a plane symmetry with reference to a surface which comprises an axis passing through the center of the curved mirror and

being perpendicular to the center part of the curved surface.

**25.** The hologram recording apparatus according to any one of claims 18 to 24, wherein the beam from the light source is a laser beam having one wavelength or more selected from wavelengths of 360nm to 850nm.

**26.** The hologram recording apparatus according to any one of claims 14 to 25, wherein the object beam irradiating unit is configured to irradiate an object beam having three wavelengths which comprise one wavelength selected from wavelengths of 400nm or more and less than 500 nm, one wavelength selected from wavelengths of 500 nm or more and less than 600 nm, and one wavelength selected from wavelengths of 600 nm to 700 nm virtually simultaneously to almost all the surface of the recording object, and the reference beam irradiating unit is configured to make a reference beam having three wavelengths which comprise one wavelength selected from wavelengths of 400nm or more and less than 500 nm, one wavelength selected from wavelengths of 500 nm or more and less than 600 nm, and one wavelength selected from wavelengths of 600 nm to 700 nm incident on the opposite surface of the photosensitive material with respect to the photosensitive surface.

**27.** A hologram recording medium recorded by a hologram recording method according to any one of claims 1 to 13.

FIG. 1

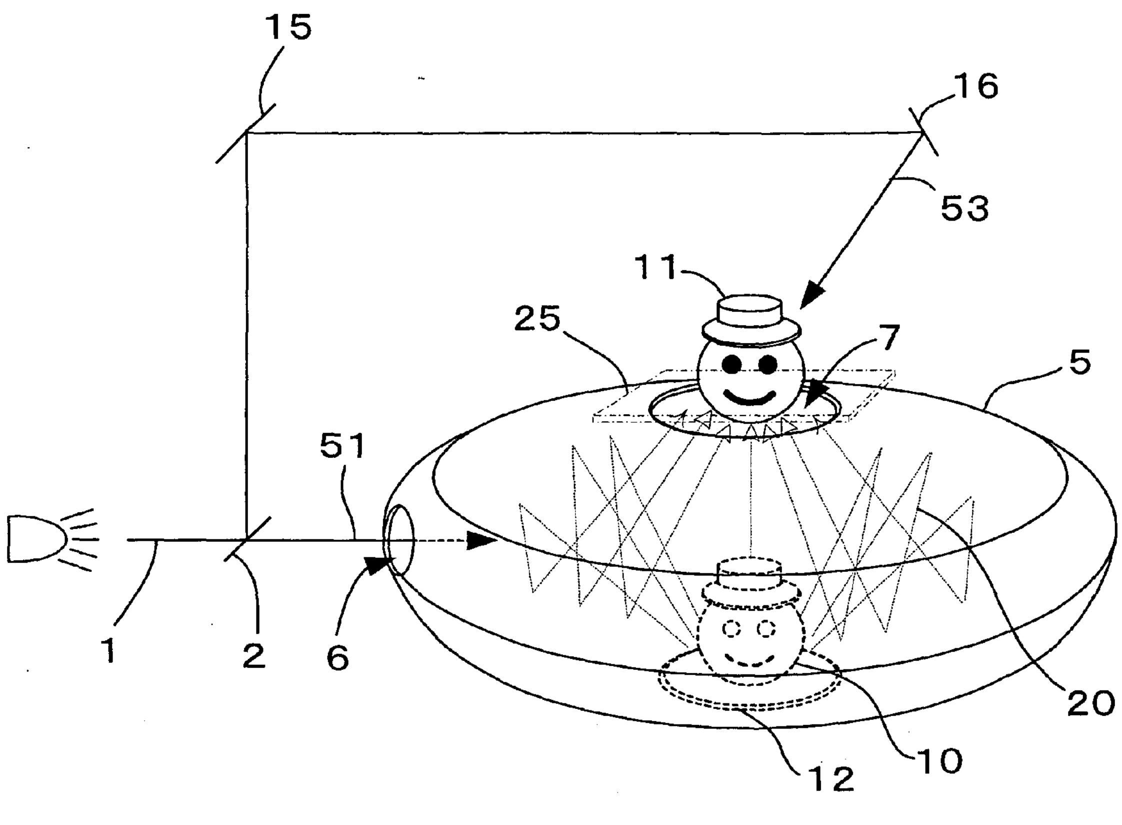

FIG. 2

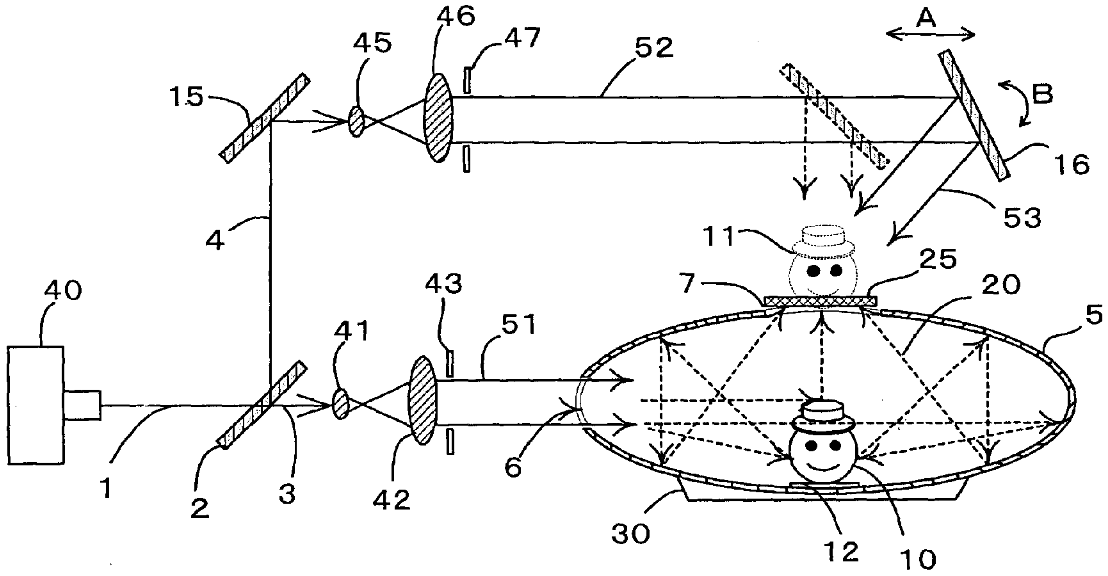

FIG. 3

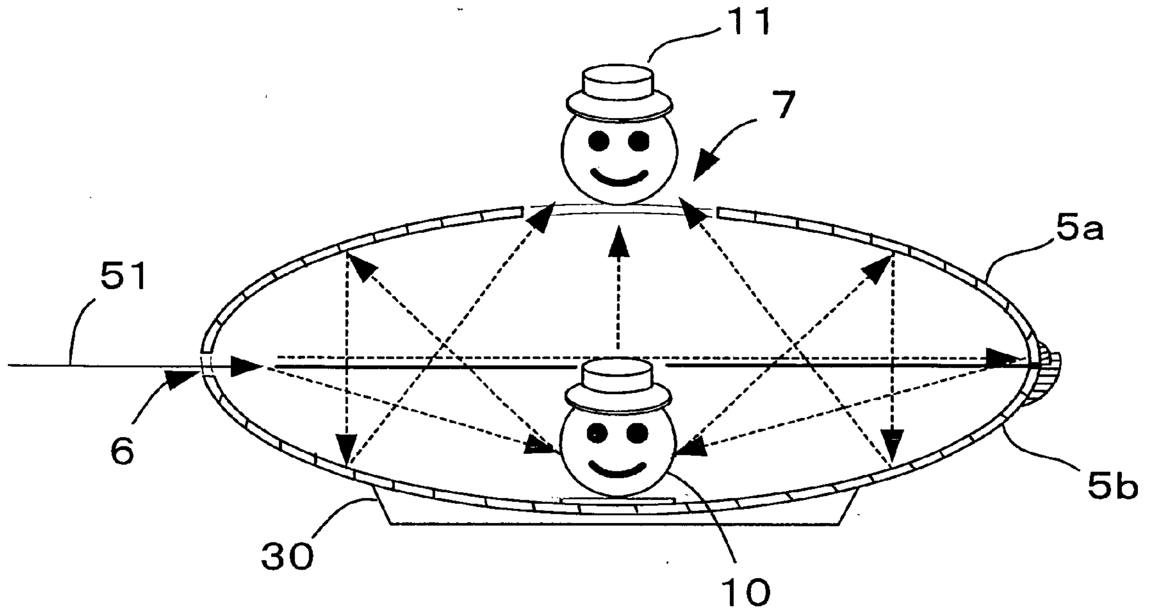


FIG. 4

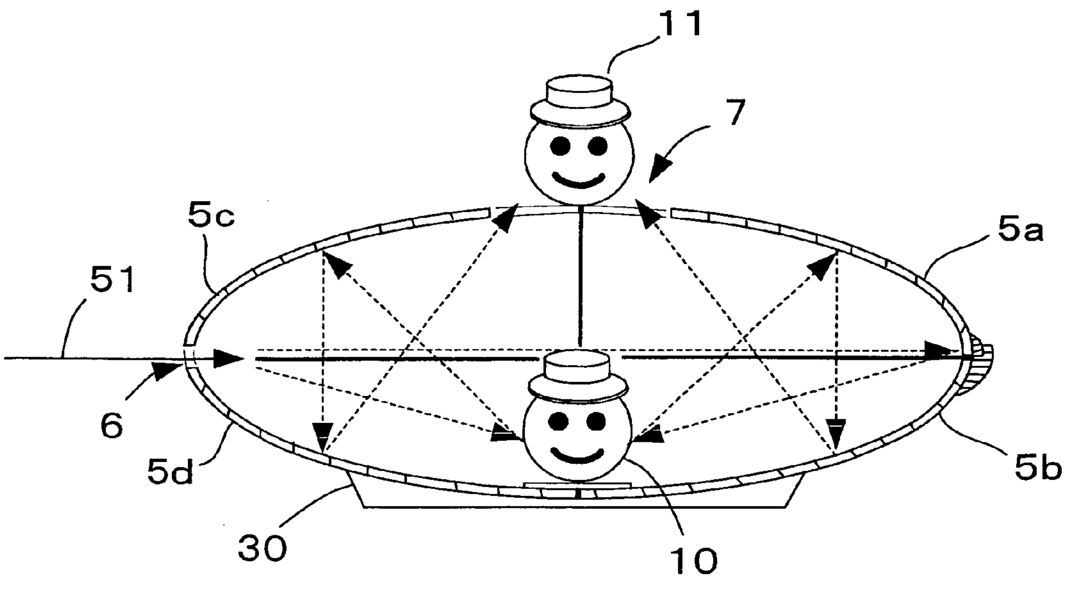

FIG. 5